# EUROPÄISCHE PATENTSCHRIFT

(11) **EP 3 976 395 B1**
(45) Veröffentlichungstag und Bekanntmachung des Hinweises auf die Patenterteilung: **27.09.2023**
(21) Anmeldenummer: 20720373.8
(22) Anmeldetag: 08.04.2020
(51) Int. Cl.: B60C 13/00

(54) **FAHRZEUGLUFTREIFEN AUFWEISEND EINE MARKIERUNGSFLÄCHE**
PNEUMATIC VEHICLE TIRES HAVING A MARKING SURFACE
PNEUMATIQUE DE VÉHICULE PRÉSENTANT UNE SURFACE DE MARQUAGE

(30) Priorität: 29.05.2019 DE 102019207939
(43) Veröffentlichungstag der Anmeldung: 06.04.2022
(73) Patentinhaber: Continental Reifen Deutschland GmbH, 30165 Hannover (DE)
(72) Erfinder: RITTWEGER, Stefan, 30419 Hannover (DE); JURCO, Juraj, 30419 Hannover (DE)
(74) Vertreter: Continental Corporation
(86) Internationale Anmeldenummer: PCT/EP2020/059957
(87) Internationale Veröffentlichungsnummer: WO 2020/239306

(56) Entgegenhaltungen:
- DE-A1-102013 205 445
- DE-T5-112014 002 818
- US-A1- 2012 055 603

## Beschreibung

Die Erfindung betrifft einen Fahrzeugluftreifen mit Seitenwänden und einem Laufstreifen und mit zumindest einer Markierungsfläche auf zumindest einer der Seitenwände und/oder dem Laufstreifen, wobei die Markierungsfläche zwei Parallelenscharen aus länglichen Erhebungen aufweist, wobei sich die beiden Parallelenscharen schneiden und ein Parallelogramm-Gitter bilden.

Derartige Markierungsflächen werden in der Regel im Zuge der Vulkanisation des Reifens mittels einer formgebenden eine Negativkontur der Markierungsfläche aufweisenden Vulkanisationsform in den Reifen geprägt. Eine strukturierte Oberfläche eines bereits vulkanisierten Reifens kann aber auch durch Abtragung, z.B. mittels Gravur, oder durch ein additives Verfahren erreicht werden.

Derartige Markierungsflächen sind bekannt. Auf der Reifenseitenwand und/oder auf dem Laufstreifen werden sie z.B. zur Darstellung einer Markierung genutzt. Eine Markierung kann dabei Abbildungen, Schriftzeichen, Firmennamen, Firmenlogos, Kennzeichnungen, Flächen, etc. umfassen. Die Markierungsfläche kann dabei Teil der Markierung sein und/oder diese ganz oder teilweise umgeben.

Die Streuung von Licht an den Flanken der Erhebungen verringert die Reflektion des Lichts an der Oberfläche des Reifens, wodurch die Helligkeitswirkung verändert ist. In der Regel wirken dabei mit Quererhebungen versehene Oberflächenbereiche dunkler als im Wesentlichen glatte, von derartigen Erhebungen freie, Oberflächenbereiche. Somit ist ein Kontrast in der an sich monochromen Oberfläche des Reifens, insbesondere der Seitenwand und/oder des Laufstreifens, ermöglicht. Hierdurch können Darstellungen von Markierungen verbessert sichtbar gemacht werden.

DE 10 2013 205445, DE 11 2014 002818 T5, US 2012/055603 A1 offenbaren jeweils Fahrzeugluftreifen mit einer Markierungsfläche auf der Seitenwand.

Bekannt ist beispielsweise aus der DE 69 202 013 T3 ein Fahrzeugluftreifen, der auf seiner Seitenwand ein Rautengitter mit einem Innenwinkel von 90° zur kontrastreichen Oberflächengestaltung und Hervorhebung einer Markierung aufweist.

Nachteilig an derartigen Ausführungsformen ist, dass die Gestaltungsmöglichkeiten gering sind.

Aufgabe ist es daher, die Kontrastwirkung noch gezielter zu beeinflussen und die Kontrastwirkung weiter zu erhöhen. Zudem soll eine einfache Herstellbarkeit des Reifens ermöglicht sein.

Dies wird erreicht, indem die Parallelogramme des Parallelogramm-Gitters einen Innenwinkel von 35° bis 90° aufweisen und dass zumindest ein Parallelogramm, bevorzugt mindestens die Hälfte der Parallelogramme, besonders bevorzugt alle Parallelogramme, innerhalb seiner bzw. ihrer flächigen Erstreckung eine zusätzliche Erhebung aufweist bzw. aufweisen.

Es hat sich gezeigt, dass ein derartiges Parallelogramm-Gitter eine deutlich stärkere Kontrastwirkung erzeugt als ein Gitter, das frei von zumindest einer derartigen zusätzlichen Erhebung ist.

Durch die zusätzliche Erhebung innerhalb der flächigen Erstreckung, d.h. zwischen den Graten der das Parallelogramm bildenden länglichen Erhebungen, eines Parallelogramms ist die Dichte an relativ zur Reifenoberfläche geneigten Flächen erhöht. Hierdurch ist die Variation an Flächen sowie deren Ausrichtung, an denen Licht in unterschiedliche Richtungen reflektiert, gestreut und absorbiert werden kann, erhöht. Die zusätzlichen geneigten Flächen der zusätzlichen Erhebung verstärken die Streuung, die Mehrfachreflektion sowie die Absorption von auf die Markierungsfläche fallenden Lichts. Zudem erzeugen die zusätzlichen Erhebungen zusätzliche Schatteneffekte, die besonders auf dem schwarzen Gummi der Seitenwände ein deutliches Hervorheben der Markierungsfläche gegenüber den umgebenden Flächenbereichen bewirken. Die Kontrastwirkung ist somit noch gezielter beeinflussbar und verbesserbar.

Weist die Hälfte aller Parallelogramme eine derartige zusätzliche Erhebung auf, kann wie bei einem Schachbrettmuster jedes zweite der Parallelogramme die zusätzliche Erhebung aufweisen. Hierdurch ist eine besonders gleichmäßige Verteilung der Parallelogramme mit zusätzlicher Erhebung erreicht. Die Parallelogramme mit zusätzlichen Erhebungen können aber auch in alternierenden Reihen angeordnet sein.

Eine weitere Verstärkung dieser Vorteile ist dadurch erreicht, dass mehr als die Hälfte, bevorzugt alle, Parallelogramme eine solche zusätzliche Erhebung aufweisen.

Eine Begrenzung des Innenwinkels auf mindestens 35° gewährleistet zudem eine vorteilhafte Entlüftbarkeit und Entformbarkeit der Markierungsfläche im Reifenbau mittels einer Vulkanisationsform.

Eine vorteilhafte Ausführungsform ist dadurch gegeben, dass der Innenwinkel 35° bis 55°, bevorzugt 40° bis 50°, besonders bevorzugt 45°, beträgt.

Der Innenwinkel von 35° bis 55°, bevorzugt von 40° bis 50°, besonders bevorzugt von 45°, bewirkt eine höhere Dichte und Variation an geneigten Flächen pro Fläche als ein quadratisches Gitter gleicher Kantenlänge. Zudem erzeugen die Bereiche um die spitzen Innenwinkel zusätzliche Schatteneffekte, die besonders auf dem schwarzen Gummi der Seitenwände ein deutliches Hervorheben der Markierungsfläche gegenüber den umgebenden Flächenbereichen bewirken. Die Kontrastwirkung ist somit noch gezielter beeinflussbar und verbesserbar.

Eine vorteilhafte Ausführungsform ist dadurch gegeben, dass die zusätzliche Erhebung des Parallelogramms eine längliche Erstreckung mit zwei Endbereichen aufweist und dass die zusätzliche Erhebung in genau einem Endbereich der zwei Endbereiche, insbesondere auf einer Höhe H3, die mindestens 1/3 der Höhe H des Parallelogramm-Gitters entspricht, an eine der länglichen Erhebungen des Parallelogramms angebunden ist.

Die zusätzliche Erhebung weist somit eine längliche Erstreckung auf und ist mit einem ihrer Endbereiche an eine der länglichen Erhebungen des Parallelogramms, insbesondere auf einer Höhe H3, die mindestens 1/3 der Höhe H des Parallelogramm-Gitters entspricht, an eine der länglichen Erhebungen des Parallelogramms angebunden, also mit dieser verbunden.

Die Höhe H des Parallelogramm-Gitters kann die über alle länglichen Erhebungen entlang ihrer Längserstreckung gemittelte Höhe sein. Höhen können gemessen sein relativ zu einem Niveau, das einem mittleren Niveau des Markierungsgrundes des Markierungsbereichs entspricht. Das Niveau kann auch das mittlere Niveau der Tiefpunkte der Parallelogramme sein. Höhen können auch gemessen sein bezüglich eines Niveaus, das einem Basisniveau entspricht, welches beispielsweise von einem Teil der Außenfläche des Fahrzeugluftreifens, insbesondere einem Boden einer auf der Oberfläche des Reifens ausgebildeten flachen Vertiefung, gebildet ist.

Mittelwerte entsprechen in der Regel dem arithmetischen Mittelwert.

Durch die Anbindung ist eine verbesserte Entlüftbarkeit im Reifenbau erreicht. Weiter stabilisiert die zusätzliche Erhebung die längliche Erhebung, an die sie angebunden ist, wodurch die längliche Erhebung resistenter gegen Anscheuerung im Gebrauch des Reifens ist.

Somit endet die zusätzliche Erhebung mit dem freien, nicht angebundenen, Endbereich innerhalb der flächigen Erstreckung des Parallelogramms. Die geneigten Flächen des freien Endbereichs der zusätzlichen Erhebung bewirken eine zusätzliche Streuung des Lichts in unterschiedliche Richtungen.

Eine vorteilhafte Ausführungsform ist dadurch gegeben, dass die längliche Erstreckung der zusätzlichen Erhebung weitgehend parallel zu einer der beiden Parallelenscharen ausgerichtet ist.

Hierdurch ist in der Herstellung des Fahrzeugluftreifens die Anzahl an Richtungen, in der Erhebungen oder Vertiefungen zur Erzeugung der entsprechenden Struktur geschaffen werden müssen, gering gehalten.

Eine vorteilhafte Ausführungsform ist dadurch gegeben, dass die zusätzliche Erhebung einen freien Endbereich aufweist, der auf einer Höhe H2, die 1/3 der Höhe H des Parallelogramm-Gitters entspricht, einen lichten Abstand von 0,05 mm bis 0,2 mm, bevorzugt von 0,08 mm bis 0,15 mm, zu der dem freien Endbereich gegenüberliegenden länglichen Erhebung aufweist.

Somit endet die zusätzliche Erhebung mit dem freien, nicht angebundenen, Endbereich innerhalb der flächigen Erstreckung des Parallelogramms. Die geneigten Flächen des freien Endbereichs der zusätzlichen Erhebung bewirken eine zusätzliche Streuung des Lichts in unterschiedliche Richtungen. Der lichte Abstand des freien Endbereichs von 0,05 mm bis 0,2 mm, bevorzugt von 0,08 mm bis 0,15 mm, zu mindestens einer der länglichen Erhebungen hat sich als besonders vorteilhaft für eine verstärkte Kontrastwirkung bei gleichzeitig guter Entformbarkeit herausgestellt.

Eine vorteilhafte Ausführungsform ist dadurch gegeben, dass das Parallelogramm-Gitter eine Höhe H von 0,1 mm bis 0,8 mm, bevorzugt von 0,2 mm bis 0,5 mm, besonders bevorzugt von 0,25 mm bis 0,35 mm, aufweist.

Durch eine derartige Höhe H ist eine günstige Dimensionierung zugunsten der Herstellbarkeit erreicht. Weiter ist bei einer solchen Tiefe, insbesondere in Zusammenhang mit einem Abstand der Parallelenschar von 0,4 mm bis 1,0 mm, bevorzugt von 0,5 mm bis 0,7 mm, besonders bevorzugt von 0,55 mm bis 0,60 mm, eine gute Kontrastwirkung erreichbar.

Eine vorteilhafte Ausführungsform ist dadurch gegeben, dass die zusätzliche Erhebung eine geringere Höhe H' aufweist als die Höhe H des Parallelogramm-Gitters.

Hierdurch ist bei vorteilhafter Stützwirkung der kurzen Quererhebungen gleichzeitig die Entformbarkeit weiter verbessert.

Eine vorteilhafte Ausführungsform ist dadurch gegeben, dass die länglichen Erhebungen zumindest einer, bevorzugt beider, der beiden Parallelenscharen mit einem Abstand von 0,4 mm bis 1,0 mm, bevorzugt von 0,5 mm bis 0,7 mm, besonders bevorzugt von 0,55 mm bis 0,6 mm, angeordnet sind.

Ein solcher Abstand von 0,4 mm bis 1,0 mm, bevorzugt von 0,5 mm bis 0,7 mm, besonders bevorzugt von 0,55 mm bis 0,60 mm, ermöglicht eine verbesserte Kontrastwirkung bei gleichzeitig geringem Fertigungsaufwand. Der Abstand kann gemessen sein zwischen Flächen, die senkrecht zur Reifenoberfläche und entlang der Grate der länglichen Erhebungen der Parallelenschar verlaufen.

Eine vorteilhafte Ausführungsform ist dadurch gegeben, dass das Parallelogramm-Gitter ein Rautengitter ist.

Somit weisen die beiden Parallelenscharen die gleichen Abstände auf. Hierdurch ist eine besonders gleichmäßige Struktur erwirkt. Als besonders vorteilhaft hat es sich dabei herausgestellt, wenn die beiden Parallelenscharen dabei einen gleichen Abstand von 0,4 mm bis 1,0 mm, bevorzugt von 0,5 mm bis 0,7 mm, besonders bevorzugt von 0,55 mm bis 0,60 mm, aufweisen.

Eine vorteilhafte Ausführungsform ist dadurch gegeben, dass zumindest eine der länglichen Erhebungen einander gegenüberliegende Flanken aufweist, die einen Winkel von mindestens 50°, bevorzugt von 55° bis 65°, miteinander einschließen.

Solche Flankenwinkel zeigen eine gute Kontrastwirkung. Eine entsprechende Negativform eines Formwerkzeugs wie einer Vulkanisationsform kann mittels Lasergravur geschaffen werden. Besonders vorteilhaft ist es dabei, wenn die einander gegenüberliegenden Flanken einen derartigen Winkel über eine Höhenerstreckung aufweisen, die zumindest einem Viertel der Höhe H des Parallelogramm-Gitters entspricht. Dies ist sowohl bei einem Winkel von mindestens 50° als auch bei einem Winkel von 55° bis 65° vorteilhaft.

Der Vorteil verstärkt sich auch oder zudem, wenn mehrere, bevorzugt alle, länglichen Erhebungen zumindest einer Parallelenschar derart ausgebildet sind. Vorteilhaft ist es auch, wenn die länglichen Erhebungen beider Parallelenscharen derart ausgebildete Flanken aufweisen. Der Winkel kann gemessen sein zwischen zwei Kreuzungsbereichen oder zwischen einem Kreuzungsbereich und einem angebundenen Endbereich.

Eine vorteilhafte Ausführungsform ist dadurch gegeben, dass zumindest eine der länglichen Erhebungen und/oder die zusätzliche Erhebung eines Parallelogramms einander gegenüberliegende Flanken aufweist, die einen Winkel von 2° bis 10°, bevorzugt von 6° bis 8°, miteinander einschließen.

Durch einen derart steilen Flankenwinkel ist eine Mehrfachreflektion und damit eine verbesserte Kontrastwirkung erreichbar. Eine entsprechende Negativform eines Formwerkzeugs wie einer Vulkanisationsform kann mittels Lasergravur des Formwerkzeugs geschaffen werden.

Besonders vorteilhaft ist es dabei, wenn die einander gegenüberliegenden Flanken einen derartigen Winkel über eine Höhenerstreckung aufweisen, die zumindest einem Viertel der Höhe H des Parallelogramm-Gitters entspricht. Dies ist sowohl bei einem Winkel von 2° bis 10° als auch bei einem Winkel von 6° bis 8° vorteilhaft.

Bei länglichen Erhebungen kann der Winkel gemessen sein zwischen zwei Kreuzungsbereichen oder zwischen einem Kreuzungsbereich und einem angebundenen Endbereich. Bei einer zusätzlichen Erhebung kann der Winkel gemessen sein zwischen einem angebundenen Endbereich und einem nicht angebundenen Endbereich.

Bevorzugt weist zumindest die zusätzliche Erhebung des Parallelogramms einander gegenüberliegende Flanken auf, die einen Winkel von 2° bis 10°, bevorzugt von 6° bis 8°, miteinander einschließen. Eine derart schmal ausgeführte zusätzliche Erhebung kann ausgezeichnet in die flächige Erstreckung des Parallelogramms eingepasst werden.

Zweckmäßig kann es sein, wenn die zusätzliche Erhebung einander gegenüberliegende Flanken aufweist, die einen Winkel von 2° bis 10°, bevorzugt von 6° bis 8°, miteinander einschließen und dabei eine mittlere Breite von 0,08 mm bis 0,13 mm, bevorzugt von 0,1 mm, aufweist. Die mittlere Breite ist der arithmetische Mittelwert der Breite gemessen in unterschiedlicher Höhe.

Eine vorteilhafte Ausführungsform ist dadurch gegeben, dass zumindest eine der länglichen Erhebungen und/oder zumindest eine zusätzliche Erhebung einen Querschnitt aufweist, der im Bereich zumindest einer Flanke einen konvex gekrümmten und/oder einen linearen und/oder einen konkav gekrümmten und/oder einen gestuften und/oder einen geknickten und/oder einen strukturierten Bereich aufweist.

Der Querschnitt verläuft senkrecht zur Längserstreckungsrichtung der jeweiligen länglichen Erhebung oder zusätzlichen Erhebung. Der Querschnitt einer länglichen Erhebung kann gemessen sein zwischen zwei Kreuzungsbereichen oder zwischen einem Kreuzungsbereich und einem angebundenen Endbereich. Der Querschnitt einer zusätzlichen Erhebung kann gemessen sein zwischen einem angebundenen Endbereich und einem freien Endbereich. Durch einen derartigen Querschnitt ist die Kontrastwirkung noch gezielter beeinflussbar und weiter erhöhbar.

Besonders vorteilhaft ist es dabei, wenn sich der entsprechend geformte Bereich über eine Höhenerstreckung erstreckt, die zumindest einem Viertel der Höhe H des Parallelogramm-Gitters entspricht.

Der Querschnitt kann symmetrisch ausgebildet sein.

Die länglichen Erhebung und/oder die zusätzliche Erhebung können in einem Knick oder in einer Rundung in einen Markierungsgrund übergehen.

Unabhängig von der genauen Ausführungsform können länglichen Erhebung und/oder die zusätzliche Erhebung einen abgeflachten Grat aufweisen. Der Grat kann ein Plateau mit einer Breite maximal 0,1 mm, bevorzugt von 0,03 mm bis 0,06 mm, umfassen. Der Grat kann auch Unregelmäßigkeiten in der Höhe aufweisen, die maximal 5 % der Höhe H betragen.

Unabhängig von der Ausführungsform kann die Markierungsfläche einen Markierungsgrund, insbesondere einen flächigen Markierungsgrund, aufweisen, der einander gegenüberliegende längliche Erhebungen eines Parallelogramms voneinander trennt.

In einer bevorzugten Ausführungsform ist die Markierungsfläche auf einer der Seitenwände des Fahrzeugluftreifens ausgebildet.

Gemäß einer weiteren bevorzugten Ausführungsform ist die Markierungsfläche am Laufstreifen des Fahrzeugluftreifens ausgebildet. Die Markierungsfläche kann dabei insbesondere auch auf Rillenflanken und/oder Rillengründen von im Laufstreifen verlaufenden Rillen oder am Laufstreifenauslauf, also an den außerhalb der Bodenaufstandsfläche zu den Seitenwänden verlaufenden Schulterflanken, oder an der Außenfläche des Laufstreifens, also an mit dem Untergrund in Kontakt tretenden Lauffläche, angebracht sein.

Weitere Merkmale, Vorteile und Einzelheiten der Erfindung werden nun anhand der Zeichnung, die schematisch Ausführungsbeispiele der Erfindung darstellt, näher beschrieben. Dabei zeigen
Fig. 1 einen Fahrzeugluftreifen 1 aufweisend eine Markierungsfläche;
Fig. 2 eine Markierungsfläche;
Fig. 3 eine Markierungsfläche;
Fig. 4a bis 4g Beispiele für Querschnitte.

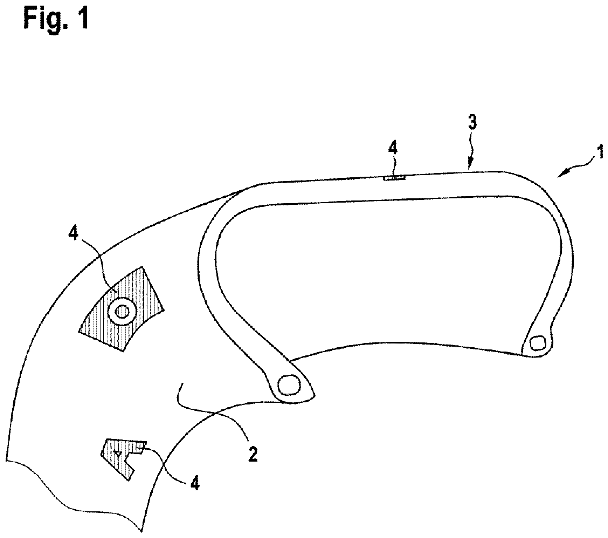

Die Figur 1 zeigt einen Fahrzeugluftreifen 1 mit Seitenwänden 2 und einem Laufstreifen 3 und mit zumindest einer Markierungsfläche 4 auf zumindest einer der Seitenwände 2 und/oder dem Laufstreifen 3. Bei einer Anordnung am Laufstreifen 3 kann die Markierungsfläche dabei insbesondere auch auf Rillenflanken und/oder Rillengründen von im Laufstreifen 3 verlaufenden Rillen oder am Laufstreifenauslauf, also an den außerhalb der Bodenaufstandsfläche zu den Seitenwänden verlaufenden Schulterflanken, oder an der Außenfläche des Laufstreifens, also an mit dem Untergrund in Kontakt tretenden Lauffläche, angebracht sein.

Die Markierungsfläche 4 weist zwei Parallelenscharen 5, 5` aus länglichen Erhebungen 6, 6' auf, wobei sich die beiden Parallelenscharen 5, 5` schneiden und ein Parallelogramm-Gitter bilden. Die Parallelogramme des Parallelogramm-Gitters weisen einen Innenwinkel 7 von 35° bis 90° auf. Zumindest eines Parallelogramme, bevorzugt mindestens die Hälfte der Parallelogramme, besonders bevorzugt alle Parallelogramme, weist bzw. weisen innerhalb seiner bzw. ihrer flächigen Erstreckung eine zusätzliche Erhebung 8 auf.

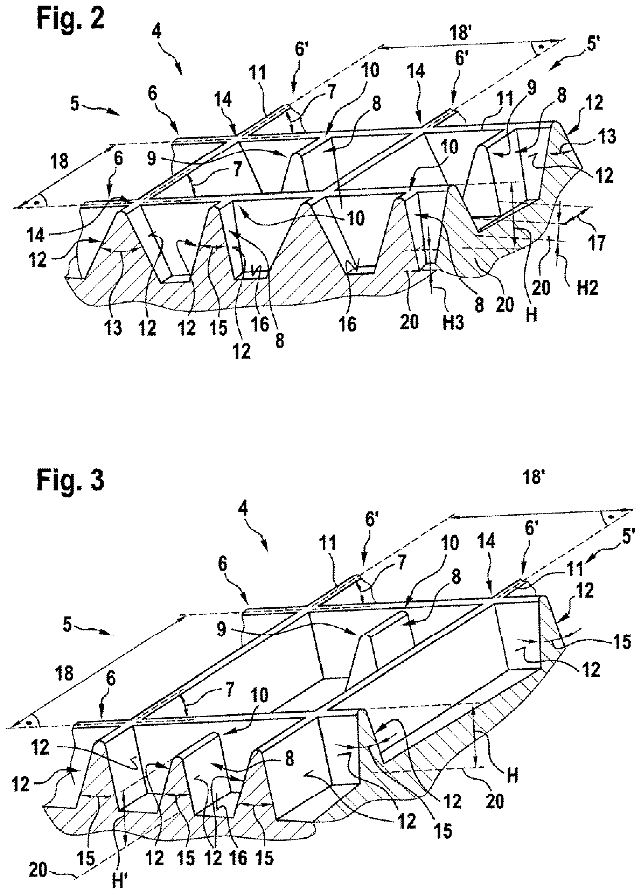

Eine Ausführungsvariante einer solchen Markierungsfläche 4 ist in der Figur 2 gezeigt. Die dargestellte Schnittansicht der Markierungsfläche 4 ist so ausgestaltet, dass die Parallelogramme des Parallelogramm-Gitters einen Innenwinkel 7 von 35° bis 55°, bevorzugt von 40° bis 50°, besonders bevorzugt von 45°, aufweisen und dass zumindest ein Parallelogramm innerhalb seiner flächigen Erstreckung, d.h. zwischen den Graten 11 der das Parallelogramm bildenden länglichen Erhebungen 6, 6`, eine zusätzliche Erhebung 8 aufweist. Bevorzugt weisen zumindest die Hälfte der Parallelogramme eine derartige Erhebung 8 auf. Im dargestellten Fall weisen alle Parallelogramme eine derartige zusätzliche Erhebung 8 auf.

Die zusätzliche Erhebung 8 des Parallelogramms weist eine längliche Erstreckung mit zwei Endbereichen 9, 10 auf. Genau ein Endbereich 10 ist dabei, insbesondere auf einer Höhe H3, die mindestens 1/3 der Höhe H des Parallelogramm-Gitters entspricht, an eine längliche Erhebung 6 der länglichen Erhebungen 6, 6` des Parallelogramms angebunden.

Die Höhe H des Parallelogramm-Gitters ist in diesem Ausführungsbeispiel die über alle länglichen Erhebungen entlang ihrer Längserstreckung gemäß arithmetischem Mittel gemittelte Höhe. Höhen können gemessen sein relativ zu einem Niveau 20, das einem mittleren Niveau eines Markierungsgrundes 16 entspricht. Das Niveau 20 kann auch das mittlere Niveau der Tiefpunkte der Parallelogramme sein. Das Niveau 20 kann auch einem Basisniveau entsprechen, welches beispielsweise von einem Teil der Außenfläche des Fahrzeugluftreifens, insbesondere einem Boden einer auf der Oberfläche des Reifens ausgebildeten flachen Vertiefung, gebildet ist.

Die zusätzliche Erhebung 8 ist dabei in ihrer länglichen Erstreckung weitgehend parallel zu den länglichen Erhebungen 6' der Parallelenschar 5` ausgerichtet.

Die zusätzliche Erhebung 8 weist einen freien Endbereich 10 auf, der auf einer Höhe H2, die 1/3 der Höhe H des Parallelogramm-Gitters entspricht, einen lichten Abstand 17 von 0,05 mm bis 0,2 mm, bevorzugt von 0,08 mm bis 0,15 mm, zu der dem freien Endbereich 19 gegenüberliegenden länglichen Erhebungen 6 aufweist.

Das Parallelogramm-Gitter weist eine Höhe H von 0,1 mm bis 0,8 mm, bevorzugt von 0,2 mm bis 0,5 mm, besonders bevorzugt von 0,25 mm bis 0,35 mm, auf.

Das dargestellte Parallelogramm-Gitter ist ein Rautengitter. Beide Parallelenscharen 5, 5` weisen einen gleichen Abstand 18 von 0,4 mm bis 1,0 mm, bevorzugt von 0,5 mm bis 0,7 mm, besonders bevorzugt von 0,55 mm bis 0,60 mm, auf. Der Abstand 18, 18` kann gemessen sein zwischen den Mitten oder Spitzen der Grate 11 der länglichen Erhebungen.

Die länglichen Erhebungen 6, 6' können einander gegenüberliegende Flanken 12 aufweisen, die einen Winkel 13 von mindestens 50°, bevorzugt von 55° bis 65°, miteinander einschließen. Der Winkel 13 kann gemessen sein zwischen zwei Kreuzungsbereichen 14 oder zwischen einem Kreuzungsbereich 14 und angebundenen Endbereich 10.

Zumindest eine der länglichen Erhebungen 6, 6' und/oder die zusätzliche Erhebung 8 eines Parallelogramms weist einander gegenüberliegende Flanken 12 auf, die einen Winkel 15 von 2° bis 10°, bevorzugt von 6° bis 8°, miteinander einschließen.

Der Winkel 15 kann gemessen sein zwischen zwei Kreuzungsbereichen 14 oder zwischen einem Kreuzungsbereich 14 und einem angebundenen Endbereich 10 oder zwischen einem angebundenen Endbereich 10 und einem nicht angebundenen Endbereich 9.

Im dargestellten Fall weisen die länglichen Erhebungen 6, 6' einander gegenüberliegende Flanken 12 auf, die einen Winkel von 13 von mindestens 50°, bevorzugt von 55° bis 65°, miteinander einschließen. Weiter weisen die zusätzlichen Erhebungen 8 einander gegenüberliegende Flanken 12 auf, die einen Winkel von 2° bis 10°, bevorzugt von 6° bis 8°, miteinander einschließen. Die Flanken 12 schließen dabei den jeweiligen Winkel 13, 15 über eine Höhenerstreckung ein, die zumindest einem Viertel der Höhe H des Markierungsbereichs entspricht.

Die länglichen Erhebung 6, 6` und/oder die zusätzliche Erhebung 8 können einen abgeflachten Grat 11 aufweisen. Der Grat kann ein Plateau mit einer Breite maximal 0,1 mm, bevorzugt von 0,03 mm bis 0,06 mm, umfassen. Der Grat kann auch Unregelmäßigkeiten in der Höhe aufweisen, die maximal 5 % der Höhe H betragen.

Die Markierungsfläche kann einen Markierungsgrund 16, insbesondere einen flächigen Markierungsgrund 16, aufweisen, der einander gegenüberliegende längliche Erhebungen 6, 6' eines Parallelogramms voneinander trennt.

Die länglichen Erhebungen 6, 6' weisen eine Höhe H von 0,1 mm bis 0,8 mm, bevorzugt von 0,2 mm bis 0,5 mm, besonders bevorzugt von 0,25 mm bis 0,35 mm, auf. Die Höhe H kann dabei zwischen Kreuzungsbereichen 14 und abseits von angebundenen Endbereichen 10 gemessen sein.

Die länglichen Erhebungen 6, 6' und/oder die zusätzlichen Erhebungen 8 weisen einen Querschnitt auf, der im Bereich zumindest einer Flanke 12 einen linearen Bereich aufweist. Dieser kann wie dargestellt in einem Knick oder aber auch gekrümmt in den Markierungsgrund 16 übergehen. Der Querschnitt der länglichen Erhebungen 6, 6` und/oder der zusätzlichen Erhebung 8 kann symmetrisch ausgebildet sein.

Die Figur 3 zeigt einen weiteren Markierungsbereich 4. Er unterscheidet sich von dem in der Figur 2 gezeigten Markierungsbereich 4 zumindest darin, dass sich die beiden Parallelenscharen 5, 5` in ihrem Abstand voneinander unterscheiden. Der Abstand 18' der Parallelenschar 5` ist geringer als der Abstand 18 der Parallelenschar 5. Weiter unterscheiden sie sich darin, dass auch die länglichen Erhebungen 6, 6' einander gegenüberliegende Flanken 12 aufweisen, die einen Winkel 15 von 2° bis 10°, bevorzugt von 6° bis 8°, miteinander einschließen. Die zusätzlichen Erhebungen 8 weisen eine geringere Höhe H' auf als die Höhe H.

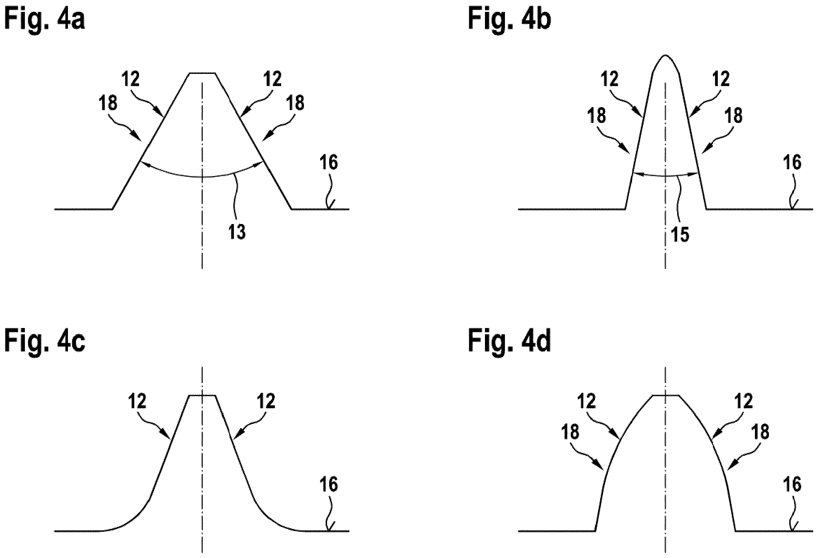

Die Figuren 4a bis 4g zeigen Beispiele für Querschnitte der länglichen Erhebungen 6, 6' und/oder der zusätzlichen Erhebungen 8. Die Querschnitte eignen sich für die in den Figuren 2 und 3 dargestellten Markierungsbereiche 4. Der Querschnitt verläuft dabei senkrecht zur Längserstreckungsrichtung der jeweiligen länglichen Erhebung oder zusätzlichen Erhebung. Der Querschnitt einer länglichen Erhebung 6, 6` kann gemessen sein zwischen zwei Kreuzungsbereichen 14 oder zwischen einem Kreuzungsbereich 14 und einem angebundenen Endbereich 10. Der Querschnitt einer zusätzlichen Erhebung 8 kann gemessen sein zwischen einem angebundenen Endbereich 10 und einem freien Endbereich 9. Ohne Beschränkung der Allgemeinheit sind die Querschnitte symmetrisch ausgeführt dargestellt.

Die Fig. 4a zeigt einen Querschnitt, der im Bereich der Flanken 12 einen linear verlaufenden Bereich 19 aufweist und wobei die Flanken 12 einen Winkel 13 von mindestens 50°, bevorzugt von 55° bis 65°, miteinander einschließen.

Die Fig. 4b zeigt einen entsprechenden Querschnitt, der im Bereich der Flanken 12 einen linear verlaufenden Bereich 19 aufweist und wobei die Flanken 12 einen Winkel 15 von 2° bis 10°, bevorzugt von 6° bis 8°, miteinander einschließen.

Die Fig. 4c zeigt exemplarisch, dass die Flanken 12, unabhängig von der genauen Ausgestaltung des Querschnitts, auch mit einer Krümmung in den Markierungsgrund 16 übergehen können.

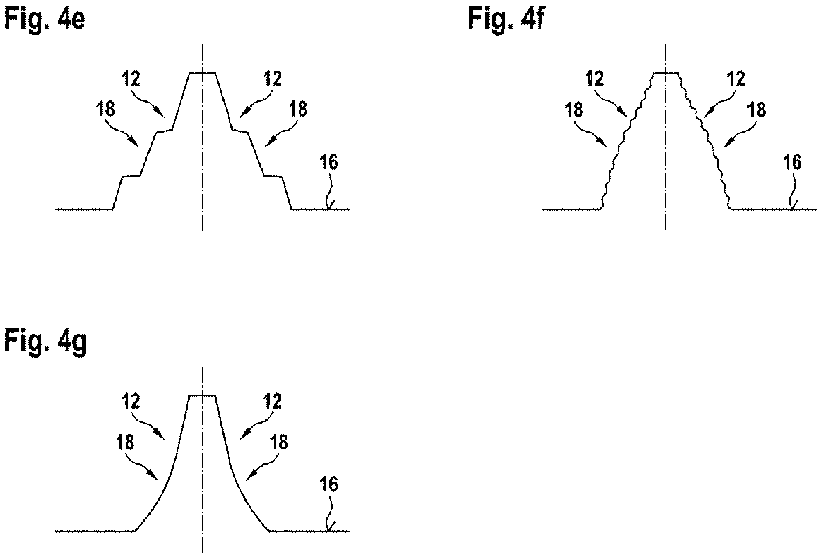

Die Fig. 4d zeigt einen Querschnitt, der im Bereich der Flanken 12 einen konvex gekrümmten Bereich 19 aufweist. Die Fig. 4e zeigt einen Querschnitt, der im Bereich der Flanken 12 einen gestuften Bereich 19 aufweist.

Die Fig. 4f zeigt einen Querschnitt, der im Bereich der Flanken 12 einen strukturierten Bereich 19 aufweist. Die Fig. 4g zeigt einen Querschnitt, der im Bereich der Flanken 12 einen konkav gekrümmten Bereich 19 aufweist.

In allen Figuren 4a bis 4g kann sich der entsprechend ausgeformte Bereich 19 über zumindest ein Viertel der Höhe H des Parallelogramm-Gitters erstrecken.

### Bezugszeichenliste

- 1: Fahrzeugluftreifen
- 2: Seitenwand
- 3: Laufstreifen
- 4: Markierungsfläche
- 5, 5': Parallelenschar
- 6, 6': längliche Erhebung
- 7: Innenwinkel
- 8: zusätzliche Erhebung
- 9: freier Endbereich
- 10: angebundener Endbereich
- 11: Grat
- 12: Flanke
- 13: Winkel
- 14: Kreuzungsbereich
- 15: Winkel
- 16: Markierungsgrund
- 17: lichter Abstand
- 18, 18`: Abstand der Parallelenschar
- 19: Bereich
- 20: Niveau
- H': Höhe der zusätzlichen Erhebung
- H: Höhe des Parallelogramm-Gitters
- H3, H2: Höhe

## Patentansprüche

1. Fahrzeugluftreifen (1) mit Seitenwänden (2) und einem Laufstreifen (3) und mit zumindest einer Markierungsfläche (4) auf zumindest einer der Seitenwände (2) und/oder dem Laufstreifen (3), wobei die Markierungsfläche (4) zwei Parallelenscharen (5, 5') aus länglichen Erhebungen (6, 6') aufweist, wobei sich die beiden Parallelenscharen (5, 5') schneiden und ein Parallelogramm-Gitter bilden, wobei die Parallelogramme des Parallelogramm-Gitters einen Innenwinkel (7) von 35° bis 90° aufweisen und
wobei die länglichen Erhebungen (6, 6') zumindest einer, bevorzugt beider, der beiden Parallelenscharen (5, 5') mit einem Abstand (18, 18') von 0,4 mm bis 1,0 mm angeordnet sind,
**dadurch gekennzeichnet, dass**
zumindest ein Parallelogramm, bevorzugt mindestens die Hälfte der Parallelogramme, besonders bevorzugt alle Parallelogramme, innerhalb seiner bzw. ihrer flächigen Erstreckung eine zusätzliche Erhebung (8) aufweist bzw. aufweisen.

2. Fahrzeugluftreifen (1) nach Anspruch 1, **dadurch gekennzeichnet, dass** der Innenwinkel (7) 35° bis 55°, bevorzugt 40° bis 50°, besonders bevorzugt 45°, beträgt.

3. Fahrzeugluftreifen (1) nach zumindest einem der vorhergehenden Ansprüche, **dadurch gekennzeichnet, dass** die zusätzliche Erhebung (8) des Parallelogramms eine längliche Erstreckung mit zwei Endbereichen (9. 10) aufweist und dass die zusätzliche Erhebung (8) in genau einem Endbereich (10), insbesondere auf einer Höhe H3, die mindestens 1/3 der Höhe H des Parallelogramm-Gitters entspricht, an eine der länglichen Erhebungen (6) des Parallelogramms angebunden ist.

4. Fahrzeugluftreifen (1) nach zumindest Anspruch 3, **dadurch gekennzeichnet, dass** die längliche Erstreckung der zusätzlichen Erhebung (8) weitgehend parallel zu einer der beiden Parallelenscharen (5') ausgerichtet ist.

5. Fahrzeugluftreifen (1) nach zumindest einem der Ansprüche 3 oder 4, dass die zusätzliche Erhebung (8) einen freien Endbereich (9) aufweist, der auf einer Höhe H2, die 1/3 der Höhe H des Parallelogramm-Gitters entspricht, einen lichten Abstand (17) von 0,05 mm bis 0,2 mm, bevorzugt von 0,08 mm bis 0,15 mm, zu der dem freien Endbereich (9) gegenüberliegenden länglichen Erhebung (6) aufweist.

6. Fahrzeugluftreifen (1) nach zumindest einem der vorhergehenden Ansprüche, **dadurch gekennzeichnet, dass** das Parallelogramm-Gitter eine Höhe H von 0,1 mm bis 0,8 mm, bevorzugt von 0,2 mm bis 0,5 mm, besonders bevorzugt von 0,25 mm bis 0,35 mm, aufweist.

7. Fahrzeugluftreifen (1) nach zumindest einem der vorhergehenden Ansprüche, **dadurch gekennzeichnet, dass** die zusätzliche Erhebung (8) eine geringere Höhe H' aufweist als die Höhe H des Parallelogramm-Gitters.

8. Fahrzeugluftreifen (1) nach zumindest einem der vorhergehenden Ansprüche, **dadurch gekennzeichnet, dass** die länglichen Erhebungen (6, 6') zumindest einer, bevorzugt beider, der beiden Parallelenscharen (5, 5') mit einem Abstand (18, 18')von 0,5 mm bis 0,7 mm, besonders bevorzugt von 0,55 mm bis 0,6 mm, angeordnet sind.

9. Fahrzeugluftreifen (1) nach zumindest einem der vorhergehenden Ansprüche, **dadurch gekennzeichnet, dass** das Parallelogramm-Gitter ein Rautengitter ist.

10. Fahrzeugluftreifen (1) nach zumindest einem der vorhergehenden Ansprüche, **dadurch gekennzeichnet, dass** zumindest eine der länglichen Erhebungen (6, 6') einander gegenüberliegende Flanken (12) aufweist, die einen Winkel (13) von mindestens 50°, bevorzugt von 55° bis 65°, miteinander einschließen.

11. Fahrzeugluftreifen (1) nach zumindest einem der vorhergehenden Ansprüche, **dadurch gekennzeichnet, dass** zumindest eine der länglichen Erhebungen (6, 6') und/oder die zusätzliche Erhebung (8) eines Parallelogramms einander gegenüberliegende Flanken (12) aufweist, die einen Winkel (15) von 2° bis 10°, bevorzugt von 6° bis 8°, miteinander einschließen.

12. Fahrzeugluftreifen (1) nach zumindest einem der vorhergehenden Ansprüche, **dadurch gekennzeichnet, dass** zumindest eine der länglichen Erhebungen (6, 6') und/oder zumindest eine zusätzliche Erhebung (8) einen Querschnitt aufweist, der im Bereich zumindest einer Flanke einen konvex gekrümmten und/oder einen linearen und/oder einen konkav gekrümmten und/oder einen gestuften und/oder einen geknickten und/oder einen strukturierten Bereich aufweist.

## Claims

1. Vehicle tire (1) having sidewalls (2) and a tread (3) and having at least one marking surface (4) on at least one of the sidewalls (2) and/or the tread (3), wherein the marking surface (4) has two parallel sets (5, 5') of elongate elevations (6, 6'), wherein the two parallel sets (5, 5') intersect and form a parallelogram grid, wherein the parallelograms of the parallelogram grid have an interior angle (7) of 35° to 90°, and
wherein the elongate elevations (6, 6') of at least one, preferably both, of the two parallel sets (5, 5') are arranged at a spacing (18, 18') of 0.4 mm to 1.0 mm,
**characterized in that**
at least one parallelogram, preferably at least half of the parallelograms, particularly preferably all of the parallelograms has or have an additional elevation (8) within its or their areal extent.

2. Pneumatic vehicle tire (1) according to Claim 1, **characterized in that** the interior angle (7) is 35° to 55°, preferably 40° to 50°, particularly preferably 45°.

3. Pneumatic vehicle tire (1) according to at least one of the preceding claims, **characterized in that** the additional elevation (8) of the parallelogram has an elongate extent with two end regions (9, 10) and **in that** the additional elevation (8) is attached to one of the elongate elevations (6) of the parallelogram in precisely one end region (10), in particular at a height H3, which corresponds to at least 1/3 of the height H of the parallelogram grid.

4. Pneumatic vehicle tire (1) according to at least Claim 3, **characterized in that** the elongate extent of the additional elevation (8) is aligned largely parallel to one of the two parallel sets (5').

5. Pneumatic vehicle tire (1) according to at least one of Claims 3 or 4, **characterized in that** the additional elevation (8) has a free end region (9) which, at a height H2 which corresponds to 1/3 of the height H of the parallelogram grid, has a clear spacing (17) of 0.05 mm to 0.2 mm, preferably of 0.08 mm to 0.15 mm, with respect to the elongate elevation (6) situated opposite the free end region (9).

6. Pneumatic vehicle tire (1) according to at least one of the preceding claims, **characterized in that** the parallelogram grid has a height H of 0.1 mm to 0.8 mm, preferably of 0.2 mm to 0.5 mm, particularly preferably of 0.25 mm to 0.35 mm.

7. Pneumatic vehicle tire (1) according to at least one of the preceding claims, **characterized in that** the additional elevation (8) has a lower height H' than the height H of the parallelogram grid.

8. Pneumatic vehicle tire (1) according to at least one of the preceding claims, **characterized in that** the elongate elevations (6, 6') of at least one, preferably both, of the two parallel sets (5, 5') are disposed at a spacing (18, 18') of 0.5 mm to 0.7 mm, particularly preferably of 0.55 mm to 0.6 mm.

9. Pneumatic vehicle tire (1) according to at least one of the preceding claims, **characterized in that** the parallelogram grid is a diamond grid.

10. Pneumatic vehicle tire (1) according to at least one of the preceding claims, **characterized in that** at least one of the elongate elevations (6, 6') has mutually opposite flanks (12) which enclose an angle (13) of at least 50°, preferably of 55° to 65°, with one another.

11. Pneumatic vehicle tire (1) according to at least one of the preceding claims, **characterized in that** at least one of the elongate elevations (6, 6') and/or the additional elevation (8) of a parallelogram has mutually opposite flanks (12) which enclose an angle (15) of 2° to 10°, preferably of 6° to 8°, with one another.

12. Pneumatic vehicle tire (1) according to at least one of the preceding claims, **characterized in that** at least one of the elongate elevations (6, 6') and/or at least one additional elevation (8) has a cross section which, in the region of at least one flank, has a convexly curved and/or a linear and/or a concavely curved and/or a stepped and/or a bent and/or a structured region.

## Revendications

1. Pneumatique de véhicule (1) avec des flancs (2) et une bande de roulement (3) et avec au moins une surface de marquage (4) sur au moins un des flancs (2) et/ou la bande de roulement (3), la surface de marquage (4) comportant deux branches parallèles (5, 5') constituées de protubérances allongées (6, 6'), les deux branches parallèles (5, 5') se coupant et formant une grille en parallélogramme, les parallélogrammes de la grille en parallélogramme présentant un angle intérieur (7) allant de 35° à 90° et
les protubérances allongées (6, 6') d'au moins une, de préférence des deux, des deux branches parallèles (5, 5') étant disposées à une distance (18, 18') allant de 0,4 mm à 1,0 mm,
**caractérisé en ce que**
au moins un parallélogramme, de préférence au moins la moitié des parallélogrammes, de manière particulièrement préférée tous les parallélogrammes, présente ou présentent une protubérance supplémentaire (8) à l'intérieur de son ou de leur extension en surface.

2. Pneumatique pour véhicule (1) selon la revendication 1, **caractérisé en ce que** l'angle intérieur (7) est de 35° à 55°, de préférence de 40° à 50°, de façon encore préférée, de 45°.

3. Pneumatique de véhicule (1) selon au moins l'une des revendications précédentes, **caractérisé en ce que** la protubérance supplémentaire (8) du parallélogramme présente une extension longitudinale avec deux zones d'extrémité (9, 10) et **en ce que** la protubérance supplémentaire (8) est reliée à l'une des protubérances allongées (6) du parallélogramme dans exactement une zone d'extrémité (10), en particulier à une hauteur H3 qui correspond au moins à 1/3 de la hauteur H de la grille en parallélogramme.

4. Pneumatique de véhicule (1) selon au moins la revendication 3, **caractérisé en ce que** l'extension longitudinale de la protubérance supplémentaire (8) est orientée largement parallèlement à l'une des deux branches parallèles (5').

5. Pneumatique de véhicule (1) selon au moins l'une des revendications 3 ou 4, **caractérisé en ce que** la protubérance supplémentaire (8) présente une zone d'extrémité libre (9) qui, sur une hauteur H2 correspondant à 1/3 de la hauteur H de la grille en parallélogramme, présente une distance libre (17) allant de 0,05 mm à 0,2 mm, de préférence de 0,08 mm à 0,15 mm, par rapport à la protubérance allongée (6) opposée à la zone d'extrémité libre (9).

6. Pneumatique de véhicule (1) selon au moins l'une des revendications précédentes, **caractérisé en ce que** la grille en parallélogramme présente une hauteur H allant de 0,1 mm à 0,8 mm, de préférence de 0,2 mm à 0,5 mm, de façon encore préférée de 0,25 mm à 0,35 mm.

7. Pneumatique de véhicule (1) selon au moins l'une des revendications précédentes, **caractérisé en ce que** la protubérance supplémentaire (8) présente une hauteur H' inférieure à la hauteur H de la grille en parallélogramme.

8. Pneumatique de véhicule (1) selon au moins l'une des revendications précédentes, **caractérisé en ce que** les protubérances allongées (6, 6') sont disposées à une distance (18, 18') allant de 0,5 mm à 0,7 mm, de préférence de 0,55 mm à 0,6 mm, d'au moins l'une, de préférence des deux, des deux branches parallèles (5, 5').

9. Pneumatique pour véhicule (1) selon au moins l'une des revendications précédentes, **caractérisé en ce que** la grille en parallélogramme est une grille en losange.

10. Pneumatique pour véhicule (1) selon au moins l'une des revendications précédentes, **caractérisé en ce qu'**au moins l'une des protubérances allongées (6, 6') présente des flancs (12) opposés l'un à l'autre, qui forment entre eux un angle (13) d'au moins 50°, de préférence de 55° à 65°.

11. Pneumatique pour véhicule (1) selon au moins l'une des revendications précédentes, **caractérisé en ce qu'**au moins l'une des protubérances allongées (6, 6') et/ou la protubérance supplémentaire (8) d'un parallélogramme présente des flancs (12) opposés qui forment entre eux un angle (15) allant de 2° à 10°, de préférence de 6° à 8°.

12. Pneumatique (1) de véhicule selon au moins l'une des revendications précédentes, **caractérisé en ce qu'**au moins l'une des protubérances allongées (6, 6') et/ou au moins une protubérance supplémentaire (8) présente une section transversale qui, dans la zone d'au moins un flanc, présente une zone à courbure convexe et/ou une zone à courbure linéaire et/ou une zone à courbure concave et/ou une zone étagée et/ou une zone pliée et/ou une zone structurée.
